# EUROPÄISCHE PATENTSCHRIFT

(11) **EP 1 046 599 B1**
(45) Veröffentlichungstag und Bekanntmachung des Hinweises auf die Patenterteilung: **06.05.2004**
(21) Anmeldenummer: 00104323.1
(22) Anmeldetag: 02.03.2000
(51) Int. Cl.: B65G 47/53, B65G 47/71

(54) **Vorrichtung zum Fördern flächiger Gegenstände**
Device for transporting sheet-type articles
Dispositif pour transporter des articles plans

(30) Priorität: 24.03.1999 CH 55599
(43) Veröffentlichungstag der Anmeldung: 25.10.2000
(73) Patentinhaber: Hunkeler AG Papierverarbeitungsmaschinen, 4806 Wikon (CH)
(72) Erfinder: Hofer, Roland, 4853 Murgenthal (CH)
(74) Vertreter: Patentanwälte Schaad, Balass, Menzl & Partner AG

(56) Entgegenhaltungen:
- EP-A- 0 791 426
- DE-U- 29 700 863
- GB-A- 957 236
- PATENT ABSTRACTS OF JAPAN vol. 010, no. 315 (M-529), 25. Oktober 1986 (1986-10-25) & JP 61 124424 A (CANON INC;OTHERS: 01), 12. Juni 1986 (1986-06-12)

## Beschreibung

Die Erfindung betrifft eine Vorrichtung zum Fördern flächiger Gegenstände gemäss dem Oberbegriff des Anspruches 1.

Beim Fördern flächiger Gegenstände, und insbesondere beim Fördern von Stapeln flächiger Gegenstände, tritt das Problem auf, dass sich die Gegenstände verformen, dass die gestapelten, flächigen Gegenstände gegenseitig verrutschen oder die Stapel sogar auseinanderfallen. Eine Vorrichtung zum Fördern flächiger Gegenstände wird zum Beispiel verwendet, um ein Stapel loser, bedruckter Blätter einer Bindevorrichtung zuzuführen. Ein erfolgreiches Binden ist nur dann möglich, wenn der Stapel der Bindevorrichtung in geordneter Ausrichtung zugeführt wird.

Eine Fördervorrichtung mit den Merkmalen des Oberbegriffes des Anspruches 1 ist aus der EP-A-0 791 426 bekannt. Bei dieser bekannten Fördervorrichtung sind zwei Fördersysteme mit rechtwinklig zueinander verlaufenden Förderrichtungen vorhanden. Das erste Fördersystem wird durch zueinander parallele und in einem gegenseitigen Abstand voneinander angeordnete Förderrollen gebildet, die eine erste Auflagefläche festlegen und die um ihre Längsachse umlaufend angetrieben werden können. Das zweite Fördersystem besteht aus umlaufend antreibbaren Förderriemen, die eine im wesentlichen ebene zweite Auflagefläche bilden, parallel zueinander und zu den Förderrollen des ersten Fördersystems verlaufen und ebenfalls in einem Abstand voneinander angeordnet sind. Die gegenseitige Anordnung der beiden Fördersysteme ist derart, dass in Förderrichtung des ersten Fördersystems gesehen jeweils eine Förderrolle mit einem Förderriemen abwechselt. Die Förderrollen werden mittels einer ersten Hubeinrichtung in einer Hubrichtung, die rechtwinklig zur ersten Auflagefläche verläuft, aus einer Ruhestellung in eine Wirkstellung angehoben und wieder in die Ruhestellung abgesenkt. Entsprechend werden die Förderriemen mittels einer zweiten Hubeinrichtung in dieser Hubrichtung aus einer Ruhestellung in eine Wirkstellung angehoben und wieder in die Ruhestellung zurückbewegt. Das Anheben und Absenken der Förderrollen und der Förderriemen erfolgt im Gegentakt, d.h. es befinden sich entweder die Förderrollen oder die Förderriemen in ihrer Wirkstellung, in der jeweils eine Förderung von Artikeln entweder in der ersten Förderrichtung oder der zweiten Förderrichtung erfolgt.

Bei der Förderung der Artikel durch die ortsfest angeordneten, angetriebenen Förderrollen bewegen sich die Artikel relativ zu den Förderrollen und werden beim Übergang von einer Förderrolle zur nächsten Förderrolle einer Walkarbeit unterworfen, was besonders bei biegsamen Artikeln zu unerwünschten Deformationen und bei der Förderung von Stapeln zu einem gegenseitigen Verrutschen der gestapelten Artikel oder sogar zum Auseinanderfallen der Stapel führen kann.

Aus der JP-A-61 124 424 ist eine Fördervorrichtung mit ebenfalls zwei Fördersystemen mit rechtwinklig zueinander verlaufenden Förderrichtungen bekannt. Jedes dieser Fördersysteme weist zwei zueinander parallele, in einem Abstand angeordnete, umlaufend angetriebene Förderriemen auf. Die in der einen Förderrichtung angetriebenen Förderriemen des ersten Fördersystems kreuzen die in der anderen Förderrichtung angetriebenen Förderriemen des zweiten Fördersystems, wobei letztere an den Kreuzungsstellen nach unten umgelenkt sind und die Förderriemen des ersten Fördersystems unterfahren. Beide Fördersysteme sind mit einer Kippvorrichtung verbunden, die dazu dient, jeweils die Förderbänder des einen Fördersystems zu heben und die Förderbänder des anderen Fördersystems zu senken, um auf diese Weise die durch das eine Fördersystem geförderten Gegenstände dem anderen Fördersystem zu übergeben.

Bei dünnen, biegsamen Gegenständen können diese beim Überfahren der Umlenkstellen der Förderriemen des zweiten Fördersystems beschädigt werden. Beim Fördern von Stapeln von flächigen Gegenständen besteht die Gefahr, dass beim Überfahren der besagten Umlenkstellen die Gegenstände im Stapel verrutschen oder die Stapel auseinanderfallen.

In der DE-U-297 00 863 ist eine Fördervorrichtung gezeigt und beschrieben, die zwei parallel zueinander verlaufende, in einem gegenseitigen Abstand angeordnete Förderriemen aufweist, die umlaufend angetrieben sind. Die beiden Förderriemen können mittels einer Hubeinrichtung aus einer unteren Ausgangsstellung in vertikaler Richtung in eine obere Förderstellung angehoben werden. Diese als Baueinheit ausgebildete Fördervorrichtung wird z.B. dazu verwendet, Gegenstände, die in einer ersten Förderrichtung entlang einer Hauptförderstrecke gefördert werden, in einer rechtwinklig zu dieser ersten Förderrichtung verlaufenden, zweiten Förderrichtung von der Hauptförderstrecke in eine Nebenförderstrecke einzuschleusen.

Es ist Aufgabe der vorliegenden Erfindung, eine Vorrichtung der eingangs genannten Art zu schaffen, mit der insbesondere flächige Gegenstände oder Stapel von flächigen Gegenständen schonend und formbeständig transportiert werden können.

Diese Aufgabe wird erfindungsgemäss mit einer Vorrichtung mit den Merkmalen des neuen Anspruches 1 gelöst.

Die abhängigen Ansprüche 2 bis 9 betreffen weitere, vorteilhafte Ausgestaltungen der erfindungsgemässen Vorrichtung.

Da die ersten und zweiten Auflageelemente jeweils eine ebene, erste und zweite Auflagefläche ausbilden, können die auf den Auflageelementen aufliegenden flächigen Gegenstände oder Stapel flächiger Gegenstände sehr schonend in der jeweiligen Förderrichtung transportiert werden. Die Gegenstände erfahren weder eine Deformation, noch sind sie einer Walkbewegung ausgesetzt, wie dies beispielsweise beim Gleiten über Rollen auftreten würde. Die zweiten Auflageelemente sind von unten durch die Zwischenräume der ersten Auflageelemente verschiebbar. Diese Ausgestaltung weist den Vorteil auf, dass ein flächiger Gegenstand sehr einfach und schonend von den ersten Auflageelementen auf die zweiten Auflageelemente übergebbar ist, und vom zweiten Auflageelement in einer zweiten Förderrichtung transportierbar ist. Die erfindungsgemässe Vorrichtung ist daher besonders geeignet, die aus einer Zuführrichtung angelieferten flächigen Gegenstände in unterschiedliche, wählbare Richtungen weiterzufördern, wobei die Gegenstände vorzugsweise entweder in Zuführrichtung weiter gefördert werden oder in einer zur Zuführrichtung senkrechten Richtung weiter gefördert werden. Eine derartige Fördervorrichtung wird auch als ein Umsetzer, eine Transferstation oder eine Transferunit bezeichnet.

In einer weiteren, vorteilhaften Ausführungsform umfasst die Fördervorrichtung zudem dritte Auflageelemente, welche eine dritte Auflagefläche ausbilden. Die dritten Auflageelemente ermöglichen ein Anheben eines auf den zweiten Auflageelementen aufliegenden Gegenstandes. Dies weist den Vorteil auf, dass ein Bewegen der zweiten Auflageelemente keine Wirkung auf den derart angehobenen Gegenstand ausüben, sodass der auf den dritten Auflageelementen aufliegende Gegenstand in dessen gegenwärtiger Lage verbleibt. Dieses selektive Stillsetzen von Gegenständen ermöglicht beispielsweise die Reihenfolge der von der Fördervorrichtung abgegebenen Gegenstände zu ändern. Zudem sind auf der Fördervorrichtung aufliegende Gegenstände neu oder anders ausrichtbar. Zum Beispiel können einige oder alle aufliegenden Gegenstände mit einem bezüglich der Zuförderrichtung seitlichen Versatz weiter gefördert werden.

Die erfindungsgemäss Vorrichtung weist zudem den Vorteil auf, dass die flächigen Gegenstände unabhängig von deren Format sicher und schonend förderbar sind.

Die erfindungsgemässe Vorrichtung ist insbesondere geeignet zum Fördern von flächigen Einzelgegenständen oder Stapel derartiger Gegenstände bestehend aus Papier, Kunststoffe, Kunststofffolien, Gewebe oder Textilien. Es sind jedoch nicht nur flächige Gegenstände förderbar.

Im folgenden wird der Aufbau sowie die Arbeitsweise der erfindungsgemässen Vorrichtung anhand der in den Figuren teilweise schematisch dargestellten Ausführungsformen beschrieben. Es zeigen:
- Fig. 1: eine schematische Ansicht der Fördervorrichtung mit geförderten Stapeln;
- Fig. 2a: ein Ausführungsbeispiel einer Fördervorrichtung in einer Seitenansicht, wobei das erste und zweite Fördermittel ersichtlich ist;
- Fig. 2b: eine Seitenansicht des zweiten Fördermittels;
- Fig. 2c: eine Draufsicht auf die Fördervorrichtung;
- Fig. 2d: ein Ausschnitt der Seitenansicht gemäss Fig. 2a mit zusätzlich angeordnetem dritten Auflageelement;
- Fig. 3a: eine schematische Seitenansicht der Fördervorrichtung mit vom ersten Fördermittel geförderten Stapeln;
- Fig. 3b: eine schematische Seitenansicht der Fördervorrichtung mit vom zweiten Fördermittel geförderten Stapeln;
- Fig. 3c: eine schematische Seitenansicht der Fördervorrichtung mit einem auf dem zweiten Fördermittel und einem auf den dritten Auflageelementen aufliegenden Stapel;
- Fig. 4: ein Teilausschnitt einer Aufsicht auf eine weitere Fördervorrichtung.

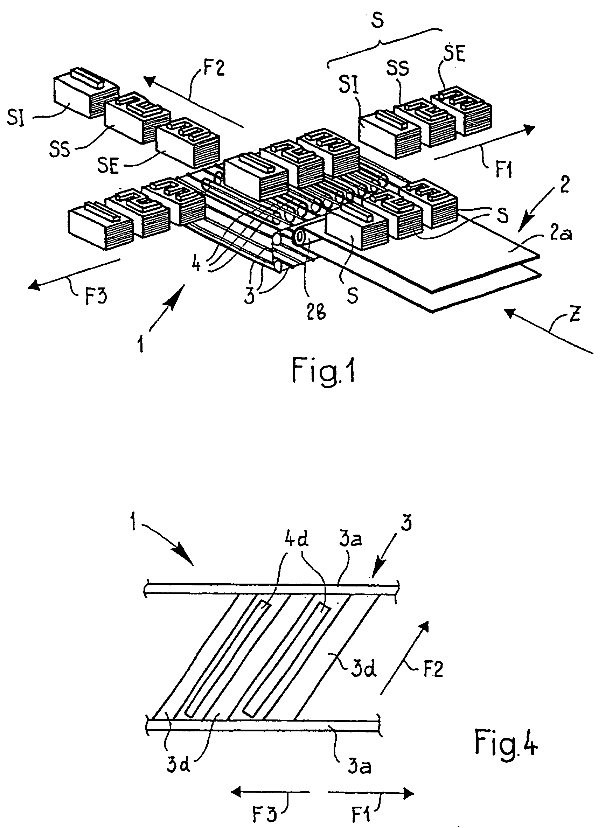

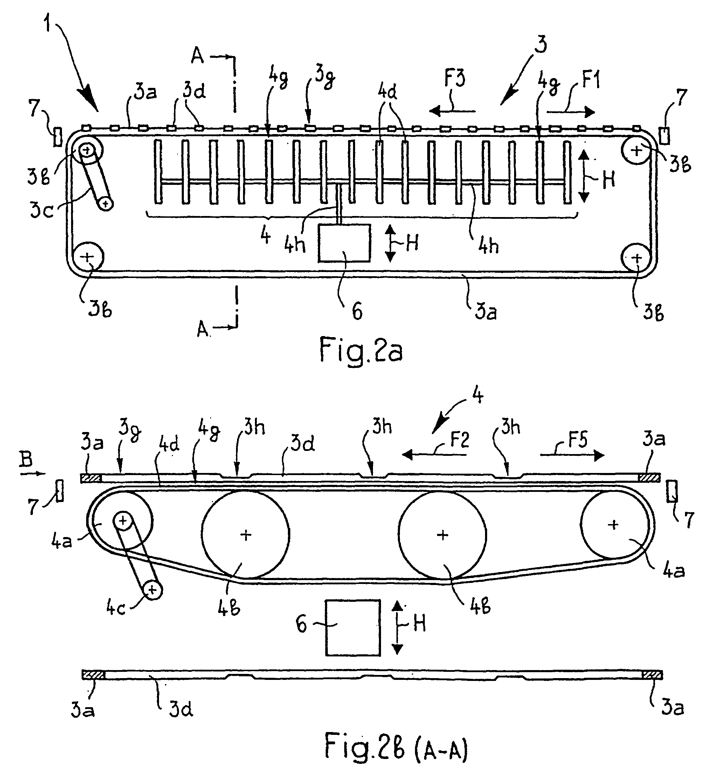

Der Fördervorrichtung 1 gemäss Fig. 1 werden von einem in horizontaler Richtung verlaufenden Förderband 2 drei nebeneinander liegende Stapel S; SE, SS, SI bestehend aus einer Mehrzahl von Einzelblättern in Zuförderrichtung Z zugeführt. Mittels des Förderbandes 2 können auch mehr oder weniger als drei Stapel S nebeneinander zugeführt werden, abhängig vom Format der Einzelblätter. Das Förderband umfasst ein an der Umlenkrolle 2b umgelenktes Band 2a. Die Fördervorrichtung 1 umfasst ein zweites, in den Figuren 2a bis 2d im Detail dargestelltes Fördermittel 4, welches die Stapel S vom Förderband 2 übernimmt, und wie dargestellt beispielsweise bis zur Mitte der von der Fördervorrichtung 1 ausgebildeten Fläche fördern. Im dargestellten Ausführungsbeispiel sind die Stapel S in drei wählbare Richtungen F1, F2 oder F3 förderbar. Die Fördervorrichtung 1 umfasst weiter ein erstes, in den Figuren 2a bis 2d ausführlich dargestelltes Fördermittel 3, welches die Stapel S in der senkrecht zur Zuförderrichtung Z verlaufenden Förderrichtung F1 oder F3 von der Fördervorrichtung 1 weg zu fördern erlaubt. Unmittelbar anschliessend an die Fördervorrichtung 1 sind weitere, nicht dargestellte Transportvorrichtungen wie Förderbänder 2 erforderlich, um die Stapel S weiter in Förderrichtung F1, F2 oder F3 zu fördern. In einer besonders vorteilhaften Ausgestaltung der Fördervorrichtung 1 ist diese in der Lage die gegenseitige Anordnung und Reihenfolge der Stapel SI, SS, SE zu verändern, wie dies mit den in Förderrichtung F2 dargestellten Stapeln SI, SS, SE dargestellt ist.

Fig. 2a zeigt in einer Seitenansicht aus Richtung Z die Fördervorrichtung 1, welche ein erstes Fördermittel 3 sowie ein zweites Fördermittel 4 umfasst. Das erste Fördermittel 3 umfasst ein beispielsweise als Kette 3a ausgestaltetes Band, welches über Umlenkrollen 3b geführt eine geschlossene Umlaufbahn bildet. Die Umlenkrollen 3b sind beispielsweise als Zahnräder ausgestaltet, welche in die Zwischenräume aufweisende Kette 3a eingreifen. Die Welle einer der Umlenkrollen 3b ist von einem Antriebsmotor her über einen Zahnriemen 3c angetrieben, um die Kette 3a in den Förderrichtungen F1 oder F3 zu bewegen. An der Kette 3a sind in Förderrichtung F1 regelmässig beabstandete erste Auflageelemente 3d angeordnet, welche sich senkrecht zur Betrachtungsebene erstrecken und eine erste, im wesentlichen eben verlaufende Auflagefläche 3g ausbilden. Die Kette 3a weist über deren ganzen Umfang verteilt angeordnete erste Auflageelemente 3d auf, wobei in Fig. 2a zur vereinfachten Darstellung nur die sich oben befindlichen ersten Auflageelemente 3d dargestellt sind. Links und rechts des ersten Fördermittels 3 sind Sensoren 7 angeordnet, welche das Vorhandensein und die Lage eines Stapels S zu erkennen erlauben, um dadurch die Bewegung des Fördermittel 3 entsprechend anzusteuern. Die erste Fördervorrichtung 3 erlaubt einen auf der ersten Auflagefläche 3g beziehungsweise auf den ersten Auflageelementen 3d aufliegenden Stapel S beziehungsweise ein Einzelblatt sehr schonend und ohne die Gefahr einer Walkeinwirkung in Förderrichtung F1 oder F3 zu fördern.

Die Fördervorrichtung 1 umfasst zudem ein zweites Fördermittel 4, welches seinerseits eine Vielzahl von in Förderrichtung F1 gegenseitig beabstandete, parallel zu den ersten Auflageelementen 3d verlaufende zweite Auflageelemente 4d umfasst. Die Auflageelemente 4d sind über ein Verbindungsmittel 4h derart fest miteinander verbunden, dass die Auflageelemente 4d eine ebene zweite Auflagefläche 4g ausbilden. Die Fördervorrichtung umfasst zudem eine Hubvorrichtung 6, welche im dargestellen Ausführungsbeispiel über das Verbindungsmittel 4h mit den Auflageelementen 4d verbunden ist, um die gegenseitige Lage der zweiten Auflagefläche 4g bezüglich der ersten Auflagefläche 3g in einer vorzugsweise senkrecht zu den Auflageflächen 3g,4g verlaufenden Hubrichtung H zu verstellen.

Eine Ansicht des Schnittes entlang der Linie A-A (Fig. 2a)ist in Fig. 2b dargestellt. Das zweite Fördermittel 4 umfasst eine Mehrzahl von Förderanordnungen von denen eine in Fig. 2b in Seitenansicht gezeigt ist und die parallel zueinander in einem gegenseitigen Abstand verlaufen. Jede Förderanordnung besteht aus zwei Umlenkrollen 4a, zwei Stützrollen 4b sowie ein von den Rollen 4a, 4b geführtes, ein zweites Auflageelement 4d ausbildendes elastisches Band, beispielsweise ein Gummiband. Die Oberkanten der zweiten Auflageelemente 4d bilden die zweite Auflagefläche 4g aus. Die links angeordnete Umlenkrolle 4a ist von einem Motor 4c angetrieben, um das zweite Auflageelement 4d, welches eine geschlossene Umlaufbahn ausbildet, in Förderrichtung F2 oder F5 anzutreiben. Es sind im Bereich des linken und rechten Endes wiederum Sensoren 7 zur Erfassung der Lage der Stapel S angeordnet. Aus der Schnittdarstellung gemäss Fig. 2b ist zudem in Seitenansicht ein als rechteckige Stange ausgebildetes erstes Auflageelement 3d ersichtlich, welches an den Stirnseiten fest mit der Kette 3a verbunden ist. Jedes erste Auflageelement 3d kann, wie dargestellt, in dessen Längsrichtung beabstandet angeordnete Vertiefungen 3h aufweisen. Diese Vertiefungen 3h erlauben ein auf der ersten Auflagefläche 3g aufliegender Stapel S mit Hilfe einer gabelförmigen, in die Vertiefung 3h eingreifenden Vorrichtung abzuheben.

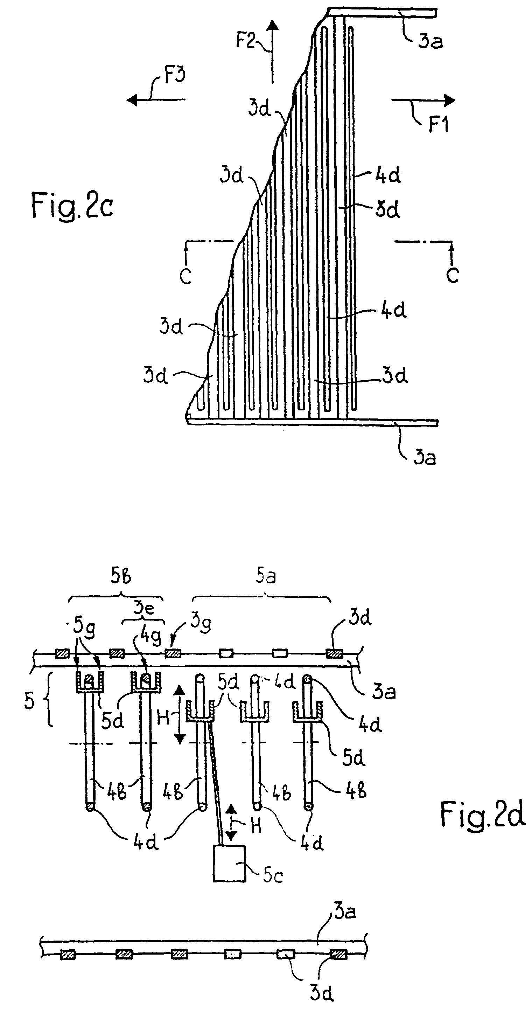

Fig. 2c zeigt eine Aufsicht auf die Fördervorrichtung 1 gemäss Fig. 2a und Fig. 2b. Die Ketten 3a sind in Förderrichtung F1 oder F3 antreibbar, wodurch die ersten Auflageelemente 3d in dieser Förderrichtung bewegbar sind. Die Kette 3a kann derart angehalten werden, dass, wie aus Fig. 2c und Fig. 2a ersichtlich, jeweils ein zweites Auflageelement 4d etwa mittig zwischen je ein erstes Auflageelement 3d zu liegen kommt. Zwei nacheinanderfolgend angeordnete Auflageelemente 3d weisen einen gegenseitigen Abstand 3e auf, welcher grösser ist als die Breite eines zweiten Auflageelementes 4d. Daher kann das zweite Fördermittel 4 in der dargestellten Lage durch die Hubvorrichtung 6 in Hubrichtung H angehoben werden, sodass die zweiten Auflageelemente 4d zwischen den ersten Auflageelementen 3d hindurchtreten und einen ursprünglich auf den ersten Auflageelementen 3d aufliegenden Stapel S anheben, der dann auf die zweiten Auflageelemente 4d zu liegen kommt. In dieser Lage ist der Stapel S durch die zweiten Auflageelemente 4d in der senkrecht zur Förderrichtung F1, F3 verlaufenden Förderrichtung F2, F5 förderbar. Sobald das zweite Fördermittel 4 wieder in die in Fig. 2a, 2b dargestellte Lage abgesenkt ist kann die Kette 3a sowie die daran befestigten ersten Auflageelemente 3d wiederum in Förderrichtung F1, F3 bewegt werden.

Fig. 2d zeigt in einer Darstellung entlang der Schnittlinie C-C in Fig. 2c eine Fördervorrichtung 1 welche ein zusätzliches drittes Fördermittel 5 aufweist. Dieses dritte Fördermittel 5 weist als U-förmige Stangen ausgebildete dritte Auflageelemente 5d auf, welche parallel zu den zweiten Auflageelementen 4d verlaufen. Die Lage dieser dritten Auflageelemente 5d bezüglich der zweiten Auflageelemente 4d ist über ein Hubantrieb 5c und ein Kraftübertragungsmittel 5e in der Hubrichtung H verstellbar. Die in Fig. 2d links angeordneten beiden dritten Auflageelemente 5d befinden sich in einer Hochlage, in welcher jeweils ein zweites Auflageelement 4d zwischen den beiden Schenkeln eines dritten Auflageelementes 5d angeordnet ist, wobei die durch die dritten Auflageelemente 5d ausgebildete dritte Auflagefläche 5g höher angeordnet ist als die zweite Auflagefläche 4g. Die drei rechts angeordneten dritten Auflageelemente 5d befinden sich in einer Tieflage 5a, sodass die zweite Auflagefläche 4g höher liegt als die dritte Auflagefläche 5g. Sobald das zweite Fördermittel 4 derart angehoben ist, dass die zweite Auflagefläche 4g oberhalb der ersten Auflagefläche 3g liegt, kann das dritte Auflageelement 5d seine Wirkung entfalten. Ist das dritte Auflageelement 5d in dessen Tieflage 5a, so liegt ein Stapel S auf den zweiten Auflageelementen 4d auf und kann von diesen in Förderrichtung F2, F5 gefördert werden. Befindet sich das dritte Auflageelement 5d in dessen Hochlage 5b, so liegt der Stapel S auf dem dritten Auflageelement 5d auf, wird dadurch von einer Bewegung des zweiten Auflageelementes 4d nicht beeinflusst, und behält daher seine Lage bei. Liegen mehrere Stapel S auf der ersten beziehungsweise zweiten Auflagefläche 3g, 4g so ist es durch ein entsprechendes Ansteuern des zweiten und dritten Fördermittel 4,5 möglich, die Stapel S selektiv, insbesondere einzeln, in Förderrichtung F2 zu fördern. Fig. 1 zeigt ein derartiges Umordnen der Stapel SI, SS, SE, in dem diese nebeneinanderliegend in Förderrichtung Z der Fördervorrichtung 1 zugeführt werden, und die Fördervorrichtung 1 die Stapel SI, SS, SE in Förderrichtung F2 nacheinander angeordnet wieder abgibt.

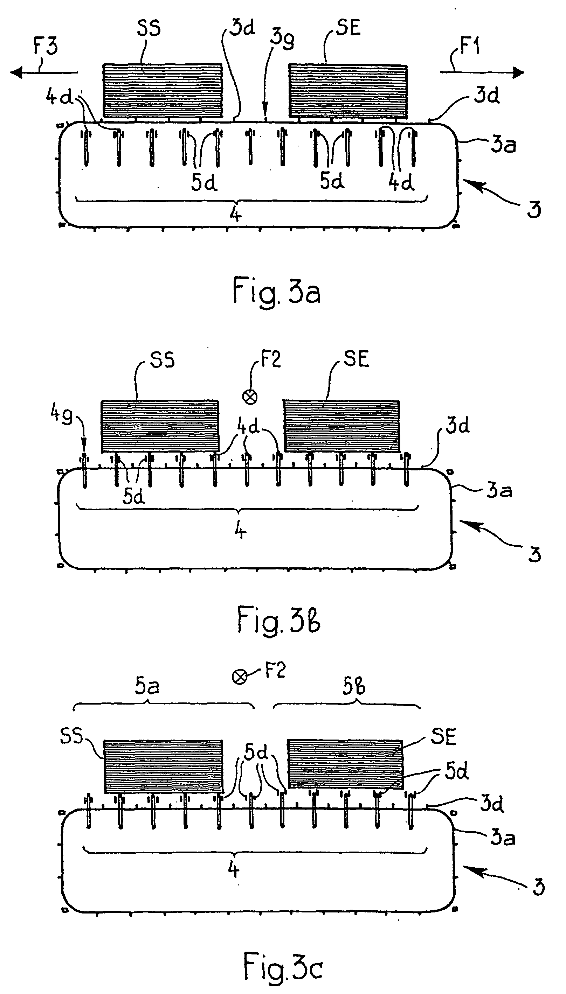

Die Figuren 3a bis 3c zeigen unterschiedliche Möglichkeiten Stapel S mit der erfindungsgemässen Fördervorrichtung 1 zu fördern. In Fig. 3a liegen die Stapel SE, SS auf der durch die ersten Auflageelemente 3d gebildeten Auflagefläche 3g auf. Die Stapel SE, SS sind durch eine entsprechende Bewegung der Kette 3a in Förderrichtung F1 oder F3 verschiebbar. Das zweite Fördermittel 4 übt keine Wirkung auf die Stapel SE, SS aus.

In der Stellung gemäss Fig. 3b wurde das erste Fördermittel 3 derart angehalten, dass die zweiten Auflageelemente 4d des zweiten Fördermittels 4 zwischen die ersten Auflageelemente 3d zu liegen kommen. Daraufhin wurde das zweite Fördermittel 4 in Hubrichtung H angehoben und/oder das erste Fördermittel 3 abgesenkt, sodass die Auflageelemente 4d zwischen den Auflageelementen 3d hochfahren und die dabei gebildete zweite Auflagefläche 4g höher als die erste Auflagefläche 3g zu liegen kommt. Dabei werden die Stapel SS, SE von der ersten Auflagefläche 3g abgehoben und liegen auf der zweiten Auflagefläche 4g auf. Durch ein Bewegen der zweiten Auflageelemente 4d in Förderrichtung F2 können die Stapel SS, SE in diese Richtung gefördert werden.

In der Darstellung gemäss Fig. 3c sind die am zweiten Fördermittel 4 angeordneten dritten Auflageelemente 5d auf der rechten Seite in einer Hochlage 5b angeordnet, sodass der Stapel SE auf der dritten Auflagefläche 5g aufliegt und die zweiten Auflageelemente 4d keine Wirkung mehr auf den Stapel SE ausüben. Durch ein Betätigen der zweiten Auflageelemente 4d ist der Stapel SS in Förderrichtung F2 bewegbar, wogegen der Stapel SE an seiner Stelle verbleibt. Daraufhin kann das zweite Fördermittel 4 beispielsweise wie in Fig. 3a dargestellt abgesenkt werden, der Stapel SE durch das erste Fördermittel 3 in Richtung F3 verschoben werden bis sich dieser in der ehemaligen Stellung des Stapels SS befindet, worauf das zweite Fördermittel 4, wie in Fig. 3b dargestellt, wieder angehoben wird, und der Stapel SE durch die zweiten Auflageelmente 4d in Förderrichtung F2 gefördert wird. Dadurch sind, wie auch aus Fig. 1 ersichtlich, die beiden Stapel SS, SE in Förderrichtung F2 hintereinander liegend angeordnet.

Fig. 4 zeigt ein Teilausschnitt einer Aufsicht auf eine Fördervorrichtung 1, welche ein in Förderrichtung F1, F3 verschiebbares erstes Fördermittel 3 mit Ketten 3a und ersten Auflageelementen 3d aufweist. Die ersten Auflageelemente 3d verlaufen quer zur Förderrichtung F1, F3 ausgerichtet, sodass die Förderrichtungen F1 und F2 einen Winkel von kleiner 90 Grad aufweisen. Die zweiten Auflageelemente 4d sind zu den ersten Auflageelementen 3d parallel ausgerichtet verlaufend angeordnet.

Die Auflageelemente 3d, 4d, 5d könnten in einer Vielzahl unterschiedlicher Ausführungsformen und/oder Materialien derart ausgestaltet sein, dass sie eine im wesentlichen ebene Auflagefläche 3g, 4g, 5g ausbilden. Die Auflageelemente könnten beispielsweise eine Vielzahl vorstehender Zähne aufweisen, deren Spitzen die Auflagefläche 3g, 4g, 5g ausbilden. Die Auflagefläche 3g, 4g, 5g sollte für den zu fördernden Gegenstand S eine Vielzahl von Stützstellen ausbilden, was dadurch zu erreichen ist, dass entsprechend dem Format der zu fördernden Gegenstände die Auflageelemente 3d, 4d, 5d entsprechend dimensioniert und gegenseitig beabstandet angeordnet werden. Sind die Auflageelemente 3d, 4d, 5d mit einem geringen gegenseitigen Abstand angeordnet, so können Gegenstände mit unterschiedlichen, auch sehr grossen oder kleinen Formaten, sicher gefördert werden.

Die erfindungsgemässe Fördervorrichtung 1 ist primär zum Fördern flächiger Gegenstände ausgestaltet, erlaubt jedoch auch ein Fördern beliebig ausgebildeter Gegenstände.

Die Kette 3a des ersten Fördermittels 3 beziehungsweise das Band 4d des zweiten Fördermittels 4 muss nicht unbedingt in einer Umlaufbahn verlaufend ausgestaltet sein. Die Kette 3a und/oder das Band 4d könnte auch zwei Enden aufweisen, welche beispielsweise auf der Umlenkrolle 3b;4a auf- und abwickelbar sind.

## Patentansprüche

1. Vorrichtung (1) zum Fördern von insbesondere flächigen Gegenständen, vorzugsweise von Stapeln (S) flächiger Gegenstände, mit einem ersten, eine erste Förderrichtung (F1, F3) aufweisenden Fördermittel (3), das erste, sich quer zu dieser ersten Förderrichtung (F1, F3) erstreckende Auflageelemente (3d) aufweist, die parallel zueinander und in einem gegenseitigen Abstand (3e) voneinander angeordnet sind und eine erste Auflagefläche (3g) festlegen, mit einem zweiten Fördermittel (4), das zweite Auflageelemente (4d) aufweist, die in einem gegenseitigen Abstand voneinander angeordnet sind, parallel zueinander und zu den ersten Auflageelementen (3d) verlaufen, eine zweite, im wesentlichen ebene Auflagefläche (4g) festlegen und als Förderelemente ausgebildet sind, die in einer zweiten Förderrichtung (F2), die quer zur ersten Förderrichtung (F1, F3) verläuft, antreibbar sind, sowie mit einer Hubvorrichtung (6), welche entweder die ersten oder die zweiten Auflageelemente (3d, 4d) in einer im wesentlichen rechtwinklig zu den Auflageflächen (3g, 4g) verlaufenden Hubrichtung (H) so zu verschieben erlaubt, dass sich entweder die erste Auflagefläche (3g) oder die zweite Auflagefläche (4g) oberhalb der anderen Auflagefläche (4g; 3g) befindet, wobei die ersten und zweiten Auflageelemente (3d, 4d) derart nebeneinander angeordnet sind, dass in der ersten Förderrichtung (F1, F3) gesehen erste und zweite Auflageelemente (3d, 4d) jeweils miteinander abwechseln, **dadurch gekennzeichnet, dass** die, durch die ersten, sich quer zur ersten Förderrichtung (F1, F3) erstreckenden Auflageelemente (3d) festgelegte erste Auflagefläche (3g) im wesentlichen eben ist und die ersten Auflageelemente (3d) in Richtung der ersten Förderrichtung (F1, F3) verschiebbar antreibbar sind und dass die ersten und zweiten Auflageelemente (3d, 4d) derart ausgestaltet und beabstandet angeordnet sind, dass bei stillstehenden ersten Auflageelementen (3d) bei einem Verschieben in Hubrichtung (H) die zweiten Auflageelemente (4d) durch die zwischen den ersten Auflageelementen (3d) gebildeten Zwischenräume hindurch verschiebbar sind.

2. Vorrichtung nach Anspruch 1, **dadurch gekennzeichnet, dass** die zwischen benachbarten ersten Auflageelementen (3d) und zwischen benachbarten zweiten Auflageelementen (4d) gebildeten Zwischenräume regelmässig sind.

3. Vorrichtung nach Anspruch 1 oder 2, **dadurch gekennzeichnet, dass** die Auflageelemente (3d, 4d) entlang einer geschlossenen Umlaufbahn umlaufen.

4. Vorrichtung nach einem der Ansprüche 1 bis 3, **dadurch gekennzeichnet, dass** die ersten Auflageelemente (3d) stabförmig ausgebildet sind.

5. Vorrichtung nach Anspruch 4, **dadurch gekennzeichnet, dass** die ersten Auflageelemente (3d) an der die erste Auflagefläche (3g) ausbildenden Seite Vertiefungen (3h) aufweisen.

6. Vorrichtung nach Anspruch 3, **dadurch gekennzeichnet, dass** die ersten Auflageelemente (3d) an einer, die geschlossene Umlaufbahn ausbildenden Kette (3a) befestigt sind.

7. Vorrichtung nach einem der Ansprüche 1 bis 3, **dadurch gekennzeichnet, dass** die zweiten Auflageelemente (4d) als Förderbänder ausgebildet sind, welche über Umlenkrollen (4a, 4b) geführt sind.

8. Vorrichtung nach einem der Ansprüche 1 bis 7, **dadurch gekennzeichnet, dass** die Hubvorrichtung (6) am ersten Fördermittel (3) oder am zweiten Fördermittel (4) angreift.

9. Vorrichtung nach einem der Ansprüche 1 bis 8, **dadurch gekennzeichnet, dass** ein drittes Fördermittel (5) vorgesehen ist, welches im wesentlichen parallel zueinander und zu den zweiten Auflageelementen (4d) verlaufende, dritte Auflageelemente (5d) aufweist, die eine im wesentlichen ebene, dritte Auflagefläche (5g) festlegen, und dass die dritten Auflageelemente (5d) derart durch die zwischen den ersten Auflageelementen (3d) gebildeten Zwischenräume hindurch in der Hubrichtung (H) verschiebbar sind, dass die dritte Auflagefläche (5g) oberhalb der zweiten Auflagefläche (4g) angeordnet ist.

10. Fördersystem, insbesondere für Druckprodukte, umfassend eine Vorrichtung nach einem der Ansprüche 1 bis 9.

## Claims

1. Device (1) for transporting, in particular, flat objects, and especially in the form of stacks (S) of flat objects provided with a first transporting feature (3) exhibiting a first transporting direction (F1, F3) which transporting feature has first support elements (3d) extending at right angles to this first transporting direction, (F1, F3), which elements are arranged so as to be parallel and at a distance (3e) to one another and which constitute a first supporting surface (3g), with a second transporting feature (4) which exhibits second support elements (4d), which elements are arranged to be a set distance apart and run parallel to one another and to the first support elements (3d) and constitute a second, essentially flat supporting surface (4g) and are shaped as transporting elements which are capable of being driven in a second transporting direction (F2) which runs at right-angles to the first transporting direction (F1, F3) and with a piston device (6) which allows either the first or second support elements (3d, 4d) to be displaced in a piston stroke direction (H) which is essentially at right-angles to the supporting surfaces (3g, 4g) this displacement to be effected in such a manner that either the first supporting surface (3g) or the second supporting surface (4g) find itself located above the other supporting surface (4g, 3g), whereby the first and second support elements (3d, 4d) are so arranged beside one another that the first and second support elements (3d, 4d) observed in the first transporting direction (F1, F3) alternate respectively with one another, **characterised in that** the first supporting surface (3g) established by the first support elements 3d) and disposed at right angles to the first transporting direction (F1, F3) is essentially flat and the first support elements (3d) are capable of being displaced in the direction of the first transporting direction (F1, F3) and that the first and second support elements (3d, 4d) are formed and arranged in such a way that when the first support elements (3d) are at rest it is possible to displace the second support elements (4d) by movement along the stroke direction (H) so that they are capable of passing through the intermediate spaces formed between the first support elements (3d).

2. Device in accordance with claim 1, **characterised in that** the intermediate spaces formed between adjacent first support elements (3d) and between adjacent second support elements (4d) are uniform.

3. Device in accordance with claim 1 or 2, **characterised in that** the support elements (3d, 4d) run around a circular track.

4. Device in accordance with one of the claims 1 to 3, **characterised in that** the first support elements (3d) are bar-shaped.

5. Device in accordance with claim 4, **characterised in that** the first support elements (3d) have depressions (3h) on the side forming the first supporting surface (3g).

6. Device in accordance with claim 3, **characterised in that** the first support elements (3d) are secured to a chain (3a) forming the circular track.

7. Device in accordance with one of the claims 1 to 3, **characterised in that** the second support elements (4d) are designed as conveyor belts which pass round deflection rollers (4a, 4b).

8. Device in accordance with one of the claims 1 to 7, **characterised in that** the piston device (6) impacts upon the first transporting feature (3) or upon the second transporting feature.

9. Device in accordance with one of claims 1 to 8, **characterised in that** a third transporting feature (5) is provided which exhibits essentially parallel third support elements (5d) running parallel to the second support elements (4d) which establish an essentially flat third supporting surface (5g) and that the third support elements (5d) are capable of being displaced along the piston stroke direction (H) through the intermediate spaces formed between the first support elements (3d) so that the third supporting surface (5g) is arranged above the second supporting surface (4g).

10. Transport system, especially suitable for printed products and embracing a device in accordance with any one of the claims 1 to 9.

## Revendications

1. Dispositif (1) pour transporter des articles notamment plans, de préférence des piles (S) d'articles plans, comprenant un premier moyen de transport (3) présentant une première direction de transport (F1, F3), qui présente des premiers éléments d'appui (3d) s'étendant transversalement à cette première direction de transport (F1, F3), qui sont disposés parallèlement les uns aux autres et à une distance mutuelle (3e) les uns des autres et constituent une première surface d'appui (3g), un deuxième moyen de transport (4), qui présente des deuxièmes éléments d'appui (4d) qui sont disposés à une distance mutuelle les uns des autres, s'étendent parallèlement les uns aux autres et par rapport aux premiers éléments d'appui (3d), constituent une deuxième surface d'appui (4g) essentiellement plane et sont réalisés sous forme d'éléments de transport qui peuvent être entraînés dans une deuxième direction de transport (F2) qui s'étend transversalement à la première direction de transport (F1, F3), ainsi qu'un dispositif de levage (6) qui permet de déplacer les premiers ou les deuxièmes éléments d'appui (3d, 4d) dans une direction de levage (H) s'étendant essentiellement à angle droit par rapport aux surfaces d'appui (3g, 4g) de sorte que soit la première surface d'appui (3g) soit la deuxième surface d'appui (4g) se trouve au-dessus de l'autre surface d'appui respective (4g ; 3g), les premiers et deuxièmes éléments d'appui (3d, 4d) étant disposés les uns à côté des autres de telle sorte que, vu dans la première direction de transport (F1, F3), les premiers et les deuxièmes éléments d'appui (3d, 4d) soient en alternance mutuelle, **caractérisé en ce que** la première surface d'appui (3g) constituée par les premiers éléments d'appui (3d) s'étendant transversalement à la première direction de transport (F1, F3) est essentiellement plane et les premiers éléments d'appui (3d) peuvent être entraînés de manière déplaçable dans la direction de la première direction de transport (F1, F3) et **en ce que** les premiers et deuxièmes éléments d'appui (3d, 4d) sont réalisés et espacés les uns des autres de telle sorte que si les premiers éléments d'appui (3d) sont immobiles, lors d'un déplacement dans la direction de levage (H), les deuxièmes éléments d'appui (4d) peuvent être déplacés à travers les espaces intermédiaires formés entre les premiers éléments d'appui (3d).

2. Dispositif selon la revendication 1, **caractérisé en ce que** les espaces intermédiaires formés entre les premiers éléments d'appui adjacents (3d) et entre les deuxièmes éléments d'appui adjacents (4d) sont réguliers.

3. Dispositif selon la revendication 1 ou 2, **caractérisé en ce que** les éléments d'appui (3d, 4d) circulent le long d'une trajectoire périphérique fermée.

4. Dispositif selon l'une quelconque des revendications 1 à 3, **caractérisé en ce que** les premiers éléments d'appui (3d) sont réalisés en forme de barres.

5. Dispositif selon la revendication 4, **caractérisé en ce que** les premiers éléments d'appui (3d) présentent des renfoncements (3h) sur le côté réalisant la première surface d'appui (3g).

6. Dispositif selon la revendication 3, **caractérisé en ce que** les premiers éléments d'appui (3d) sont fixés sur une chaîne (3a) constituant la trajectoire périphérique fermée.

7. Dispositif selon l'une quelconque des revendications 1 à 3, **caractérisé en ce que** les deuxièmes éléments d'appui (4d) sont réalisés sous forme de bandes transporteuses qui sont guidées sur des poulies de renvoi (4a, 4b).

8. Dispositif selon l'une quelconque des revendications 1 à 7, **caractérisé en ce que** le dispositif de levage (6) vient en prise sur le premier moyen de transport (3) ou sur le deuxième moyen de transport (4).

9. Dispositif selon l'une quelconque des revendications 1 à 8, **caractérisé en ce qu'**il est prévu un troisième moyen de transport (5) qui présente des troisièmes éléments d'appui (5d) s'étendant essentiellement parallèlement les uns aux autres et aux deuxièmes éléments d'appui (4d), qui constituent une troisième surface d'appui (5g) essentiellement plane, et **en ce que** les troisièmes éléments d'appui (5d) peuvent être déplacés de telle sorte à travers les espaces intermédiaires formés entre les premiers éléments d'appui (3d) dans la direction de levage (H) que la troisième surface d'appui (5g) soit disposée au-dessus de la deuxième surface d'appui (4g).

10. Système de transport, notamment pour des produits d'impression, comprenant un dispositif selon l'une quelconque des revendications 1 à 9.
